# EUROPEAN PATENT SPECIFICATION

(11) **EP 2 839 972 B1**
(45) Date of publication and mention of the grant of the patent: **01.05.2019**
(21) Application number: 14181216.4
(22) Date of filing: 18.08.2014
(51) Int. Cl.: B29D 30/06, B60C 5/14, B60C 1/00

(54) **Tire having laminated innerliner with reinforced splice**
Reifen mit laminierter Innenauskleidung mit verstärktem Spleiß
Pneu comportant une gomme intérieure stratifiée à épissure renforcée

(30) Priority: 22.08.2013 US 201313972971
(43) Date of publication of application: 25.02.2015
(73) Proprietor: The Goodyear Tire & Rubber Company, Akron, Ohio 44316 (US)
(72) Inventor: Lee, Byoung Jo, Copley, OH Ohio 44321 (US); Brainerd, II, John Fleming, Medina, OH Ohio 44256 (US); Dunker, Philip Alan, Stow, OH Ohio 44224 (US); Incavo, Joseph Alan, The Woodlands, TX Texas 77382 (US); Goad, Brandon Clifford, Denver, CO Colorado 80209 (US)
(74) Representative: Kutsch, Bernd

(56) References cited:
- EP-A1- 2 520 446
- EP-A2- 0 706 878
- EP-A2- 1 145 872
- EP-A2- 2 452 832
- EP-A2- 2 604 447
- KR-A- 20130 035 938
- US-A1- 2011 061 783

## Description

### Field of the Invention

The present invention relates to tires, preferably pneumatic tires, having a laminated innerliner with a reinforced splice. The laminated innerliner is a preferably pre-formed laminate comprising an innerliner film which contains an RFL adhesive coating on both sides for which the innerliner film is cohesively bonded through the RFL adhesive to an uncured tire rubber carcass ply. The splice comprises overlapping end portions of the uncured laminated innerliner cohesively bonded together through the RFL adhesive which provides building tack. Preferably, the splice is reinforced by an uncured rubber strip cohesively bonded to the laminate by the building tack-providing RFL adhesive for which the strip abridges, the overlapping end portions of the splice, or is sandwiched between the overlapped end portions of the splice, to form a cohesively bonded composite. The assembly, or composite, thereof is cured to adhesively bond the splice and rubber strip together.

### Background of the Invention

Pneumatic tires usually contain barrier layers to retard permeation of atmospheric air or oxygen. Such barrier layers are usually in a form of innerliner layers for the tires which are typically comprised of butyl or halogenated butyl rubber (e.g. halobutyl rubber) based rubber compositions which have greater resistance to permeability of air or oxygen than other rubber components of the tire. The barrier layers, or innerliners, are provided to inhibit, or retard, the loss of air or oxygen from the pneumatic tire cavity through the barrier layer into the tire carcass which thereby promotes retention of air, including retention of air pressure, within the pneumatic tire cavity. In order to provide a suitable degree of air or oxygen impermeability, the innerliner layer is typically provided as a sufficiently thick layer which, in turn, may add significant weight to the tire. Further, an additional rubber layer, sometimes referred to as a rubber tie layer, with beneficially low hysteresis loss, may be positioned, or sandwiched, between the barrier layer and the tire rubber carcass. For the description of this invention, such rubber tie layer is considered as being a part of the tire carcass. Such barrier layers for pneumatic rubber tires are well known to those having skill in such art.

As indicated above, the thickness of the butyl or halogenated butyl rubber based barrier layer may add to the weight of the tire. Accordingly, alternate thinner materials with low air or oxygen permeability may be desired, particularly in a form of thin films, for use as the barrier layer. Various candidates which are relatively impermeable to air or oxygen have heretofore been proposed for use as air barriers in tires, including, for example, non-elastomeric films of polyvinylidene chloride, nylon, and polyester. For example, see US-A- 5,040,583 and US-A- 4,928,741. Composites containing films have been proposed for use as air barriers in tires such as, for example, at least one layer of a thin film of such non-elastomeric barrier material sandwiched and bonded between elastomer layers of elastomeric compositions.

Thin films of alloys (alloy film) with a resistance to air and/or oxygen permeability have also been proposed for a tire innerliner layer comprising, for example, an alloy of thermoplastic resin (as a continuous phase) which may contain a blend or dispersion of elastomer domains (as a discontinuous phase) or other thermoplastic resin. Optionally, such alloy may contain a binder resin to enhance the compatibility between the thermoplastic resin and dispersed elastomer domains.

Advantageously, films of such low air/oxygen permeable alloys can be significantly thinner than their conventional butyl rubber-based counterpart tire innerliners and can therefore promote a tire weight savings.

The alloy films may be provided, for example, as a strip which is coated on one or both sides with an RFL adhesive to promote adhering of overlapping ends of the strip together, particularly where the strip is in a form of a circumferential hoop positioned on, or intended to be positioned on, the inside surface of a pneumatic tire carcass.

For this invention, is desired to provide a barrier layer in a form of a preferably pre-formed laminated innerliner with reinforced adhesive bonded splice. The splice preferably comprises overlapping ends of the laminated innerliner. Preferably, the laminated innerliner is a pre-formed laminate comprising an innerliner film adhesively bonded to a tire carcass cord reinforced rubber ply.

The splice of overlapped ends of the laminated innerliner is reinforced by a rubber layer adhesively bonded to the laminate which extends over overlapped ends of the splice, or is positioned between the overlapped ends of the bonded splice to form an adhesively bonded composite.

The innerliner film preferably comprises a composite of an alloy film coated on both sides with an RFL adhesive to provide building tack between the innerliner film and uncured tire carcass rubber ply and to be thereby cohesively adhered, or bonded, by the RFL adhesive to a tire carcass cord reinforced rubber ply to provide a laminate. In one aspect, the cord reinforced rubber carcass ply is provided to provide support for the thin alloy film. The pre-formed laminate is positioned circumferentially around, or intended to be positioned around, the inner surface of the tire cavity within a pneumatic rubber tire with ends of the laminate overlapping each other in an overlapping configuration.

The aforesaid building tack for the uncured component(s) before curing the uncured component(s), referred to herein as cohesive bonding, is provided by the RFL adhesive. Upon curing the component(s), such as by sulfur curing, the components become adhesively bonded together by the RFL adhesive. It is a feature of this invention for building tack for building the components comprising the laminated innerliner, the splice and rubber strip reinforcement applied to the splice to be provided by the RFL adhesive, which is referred to herein as being a co-adhesive for a co-adhesive bond (through the building tack) and later becoming a more secure adhesive bond upon curing (e.g. sulfur curing) of composite comprising the components.

Therefore, in practice, it is desired for the ends of the uncured laminate to overlap each other to form a splice and for the overlapped end portions of the laminate to be RFL cohesively bonded together by the RFL adhesive coating.

However, it is envisioned that considerable stress is placed on the RFL cohesively bonded splice as the uncured rubber tire is expanded during the tire building process during which the diameter of the uncured tire is increased.

Therefore, as indicated above, it is proposed to evaluate reinforcing the cohesively bond the splice of the RFL coated overlapped ends of the uncured laminate by at least one of:
(A) providing a rubber strip overlay over at least one of its spliced ends which extends over and is cohesively bonded by the RFL adhesive to the splice and to a portion of the surfaces of the laminate which adjoin the spliced end (adjoin the splice),
(B) providing a rubber strip positioned between and cohesively bonded to the overlapped portions of the laminate (at the splice), and
(C) providing an extension of the alloy film beyond the splice and thereby beyond the cord reinforced rubber carcass ply ends of the laminate to overlay and cohesively bond to a surface of the laminate.

EP-A-2 604 447 describes a tire containing a layer composite of a sealant layer and air permeation resistant film. The air permeation resistant film overlaps the puncture sealant layer with an optional adhesive coating there between. An optional innerliner rubber layer overlays the air permeation resistant film with an optional adhesive coating there between. The air permeation resistant film comprises a thermoplastic resin and contains a dispersed elastomer comprising domains of butyl rubber. The optional adhesive coating may be an RFL adhesive.

EP-A-1 145 872 describes a pneumatic tire in accordance with the preamble of claim 1.

### Summary and Practice of the Invention

The invention relates to a tire in accordance with claim 1 and to a method in accordance with claim 9.

Dependent claims refer to preferred embodiments of the invention.

In accordance with a preferred aspect of this invention, a tire is provided which contains a circumferential tire tread, an underlying and supporting carcass comprising at least one cord reinforced rubber ply extending from separate spaced apart tire beads through the crown of the tire (underlying and supporting the circumferential tire tread) and a pre-formed laminated tire innerliner layer, (pre-formed in a sense of the innerliner laminate being formed prior to application to the tire);
where said pre-formed laminated innerliner (the pre-formed laminate) comprises an alloy film cohesively bonded to an uncured tire carcass cord reinforced rubber ply;
where both sides of said alloy film contain an RFL adhesive coating;
where said alloy film is cohesively bonded to said uncured cord reinforced rubber tire carcass ply by said RFL coating on said alloy film;
where the pre-formed laminated innerliner layer is a circumferential innerlayer of the tire having its ends joined together in an overlapped configuration to thereby form an RFL cohesively bonded splice;
where the rubber composition of said rubber tire carcass ply comprises at least one diene-based elastomer, without a butyl or halobutyl based rubber (thereby exclusive of butyl and halobutyl rubber);
where the alloy film comprises at least 50 percent by weight of a thermoplastic polymer comprising at least one of nylon or polyester terephthalate (desirably nylon) and a minor portion of at least one of:
(A) a dispersion of elastomer domains comprising at least one diene-based elastomer, and
(B) a polymer comprising at least one of polyalkylene glycol (e.g. at least one of polyethyleneglycol, polypropyleneglycol and polytetramethylene glycol), polyoxyalkylene diamine (e.g. at least one of polyoxyethylene diamine, polyoxypropylene diamine and polyoxytetramethylene diamine) and copolymers thereof,
where the splice of the RFL coated overlapped ends of the laminate is reinforced by at least one of:
(C) a rubber strip positioned over a spliced end of said laminate at said splice and extending over and RFL cohesively bonded to surfaces of the laminate adjoining the spliced end,
(D) a rubber strip positioned between and RFL cohesively bonded to the overlapped surfaces of the laminate at the splice, and
(E) a portion of the alloy film extending beyond the splice and the cord reinforced rubber carcass ply ends of the laminate which is RFL cohesively bonded to surfaces of the laminate.

In a preferred aspect of the invention, said RFL adhesive comprises a resorcinol-formaldehyde resin/styrene-butadiene vinylpyridine latex optionally containing a styrene-butadiene rubber latex, and optionally containing a blocked isocyanate.

In additional accordance with this invention the tire is provided as a cured rubber tire (e.g. a sulfur cured rubber tire) with the splice and rubber strip reinforcement being adhesively bonded together by said RFL adhesive.

In further accordance with a preferred aspect of this invention, a method of preparing a pneumatic tire comprises:
(A) applying a pre-formed laminated innerliner uncured layer around a cylindrical tire building drum,
(B) overlapping the ends of the applied laminated uncured innerliner to form a splice, and
(C) reinforcing the splice by at least one of:
   (1) application of a rubber strip over the splice which extends over the splice ends and is RFL cohesively bonded to the splice and to surfaces of the laminate adjoining the splice,
   (2) application of a rubber strip between and RFL cohesively bonded to the overlapped surfaces of the laminate adjoining the splice, and
   (3) providing an extension of the RFL coated alloy film beyond the splice and the cord reinforced rubber carcass ply ends of the laminate which is cohesively bonded to surfaces of the laminate by said RFL adhesive coating;
where the rubber strip comprises at least one sulfur curable diene-based elastomer,
wherein said pre-formed laminated uncured innerliner layer (the pre-formed laminate) comprises an alloy film adhesively bonded to a tire carcass cord reinforced rubber ply;
wherein both sides of said alloy film contain an RFL adhesive coating; wherein said alloy film is cohesively bonded to said cord reinforced rubber tire carcass ply by said RFL coating on said alloy film;
wherein the rubber composition of said rubber tire carcass comprises at least one diene-based elastomer, without a butyl or halobutyl based rubber (thereby exclusive of butyl and halobutyl rubber),
wherein the alloy film comprises at least 50 percent by weight of a thermoplastic polymer comprising at least one of nylon or polyester terephthalate (desirably nylon) and a minor portion of at least one of:
(D) a dispersion of elastomer domains comprising at least one diene-based elastomer, and
(E) a polymer comprising at least one of polyalkylene glycol (e.g. at least one of polyethyleneglycol, polypropyleneglycol and polytetramethylene glycol), polyoxyalkylene diamine (e.g. at least one of polyoxyethylene diamine, polyoxypropylene diamine and polytetramethylene diamine) and copolymers thereof,
wherein said RFL adhesive comprising a resorcinol-formaldehyde resin/styrene-butadiene vinylpyridine latex optionally containing a styrene-butadiene rubber latex, and optionally containing a blocked isocyanate.

In one embodiment, the method further comprises curing the tire (e.g. curing the tire in a mold at an elevated temperature such as, for example, in a range of from 150 to 180°C) and thereby providing the splice and protective rubber strip adhesively bonded together by said RFL adhesive.

In practice, said RFL adhesive is preferably a well known resorcinol-formaldehyde resin/butadiene-styrene-vinyl pyridine terpolymer latex, or a blend thereof with a butadiene/styrene rubber latex, used in the tire industry for application to fabrics, fibers and textile cords for aiding in their adherence to rubber components (for example, see US-A- 4,356,219) although not understood as being applied to the multi-layered composite of this invention which is considered herein to be a significant departure from past practice. Suitable particulate polyamide may be made for example following the methods of US-A- 7,740,938 and application of an RFL adhesive to particles of polyaramide for use in a tire may be used. For example, see US-A-8,299,165.

In practice, as indicated, the film may be pretreated by the RFL coating to enhance interaction, namely to promote bonding, with the rubber composition.

In one embodiment, the film is treated, namely coated, with an aqueous RFL emulsion comprising a combination or resorcinol-formaldehyde resin, and one or more indicated elastomer latexes, and the coating dried to remove water.

In one embodiment, the RFL for said coating may include the resorcinol formaldehyde resin, a styrene-butadiene copolymer latex and vinylpyridine-styrene-butadiene terpolymer latex. In a further embodiment, the RFL may also include a blocked isocyanate.

In one embodiment, the RFL adhesive composition comprises:
(A) resorcinol,
(B) formaldehyde,
(C) a styrene-butadiene rubber latex,
(D) a vinylpyridine-styrene-butadiene terpolymer latex, and, optionally,
(E) a blocked isocyanate.

The resorcinol reacts with formaldehyde to produce a resorcinol-formaldehyde reaction product. This reaction product is the result of a condensation reaction between a phenol group on the resorcinol and the aldehyde group on the formaldehyde. Resorcinol resoles and resorcinol-phenol resoles, whether formed in situ within the latex or formed separately in aqueous solution, are considerably superior to other condensation products in the adhesive mixture.

For preparation of an RFL adhesive, for example, the resorcinol may be dissolved in water to which formaldehyde has been added (for example, 37 percent formaldehyde) together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin is mixed with the styrene-butadiene latex and vinylpyridine-styrene-butadiene terpolymer latex. The resole or other mentioned condensation product or materials that form said condensation product should, for example, constitute from 5 to 40 parts and more desirably 10 to 28 parts by weight solids of the latex mixture. The condensation product forming the resole or resole type resin forming materials should desirably be partially reacted or reacted so as to be only partially soluble in water. Sufficient water is then preferably added to give around 12 percent to 28 percent by weight overall solids in the final mixture. The weight ratio of the polymeric solids from the latex to the resorcinol/formaldehyde resin should, for example, be in a range of 2/1 to 6/1.

In one embodiment, the RFL adhesive may include a blocked isocyanate. For example, 1 to 8 parts by weight of solids of a blocked isocyanate is added to the adhesive. The blocked isocyanate may be any suitable blocked isocyanate known to be used in RFL adhesive dips including, but not limited to, caprolactam blocked methylene-bis-(4-phenylisocyanate), such as Grilbond-IL6 available from EMS American Grilon, Inc., and phenol formaldehyde blocked isocyanates as disclosed in US-A- 3,226,276; US-A- 3,268,467; and US-A- 3,298,984; the three of which are fully incorporated herein by reference. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as epsilon-caprolactam, delta-valerolactam, and butyrolactam, ureas such as urea and diethylene urea, oximes such as acetoxime, cyclohexanoxime, benzophenon oxime, and alpha-pyrolidon.

The polymers of the RFL adhesive composition may be applied in a form of an aqueous latex or otherwise, usually in a form of a latex. In one embodiment, for example, a vinylpyridine-styrene-butadiene terpolymer latex and styrene-butadiene rubber latex may be added to the RFL adhesive composition. The vinylpyridine-styrene-butadiene terpolymer may be present in the RFL adhesive such that the solids weight of the vinylpyridine-styrene-butadiene terpolymer is from 50 percent to 100 percent of the solids weight of the styrene-butadiene rubber; in other words, the weight ratio of vinylpyridine-styrene-butadiene terpolymer to styrene-butadiene rubber is from 1/1 to 2/1.

In further accordance with this invention, said tire assembly is provided as a sulfur vulcanized composite. Such vulcanization may be conducted, for example, under conditions of elevated temperature and pressure as would be well known to those having skill in such art of rubber vulcanization.

In practice, said innerliner barrier composite is preferably a pre-formed multilayered, film-containing, composite, as previously described, and the pre-formed composite built into the tire to form the uncured tire assembly of rubber components after which the tire assembly is vulcanized under conditions of elevated temperature and pressure in a suitable tire mold to form a tire comprised of integral components.

A significant aspect of this invention, as previously indicated, is the inclusion of the RFL cohesive coating on both sides of the film and the RFL coated film is adhered to the surface of an uncured diene-elastomer containing rubber composition of said tire carcass ply with the RFL cohesive layer therebetween.

This configuration of the multi-layered uncured composite is considered to be significant in a sense of enabling the uncured composite to have suitable flexibility and elasticity for tire manufacturing processes and tire service under tire operating conditions while also providing a suitable barrier for air and/or oxygen.

Representative of sulfur vulcanizable elastomers of said tire carcass to which said RFL adhesive is in contact may comprise, for example, cis 1,4-polyisoprene, cis 1,4-polybutdiene and styrene/butadiene copolymer rubbers.

### Brief Description of the Drawings

The figures contained in the accompanying drawings are presented to illustrate several embodiments of the reinforced laminated innerliner of the invention.

### The Drawings

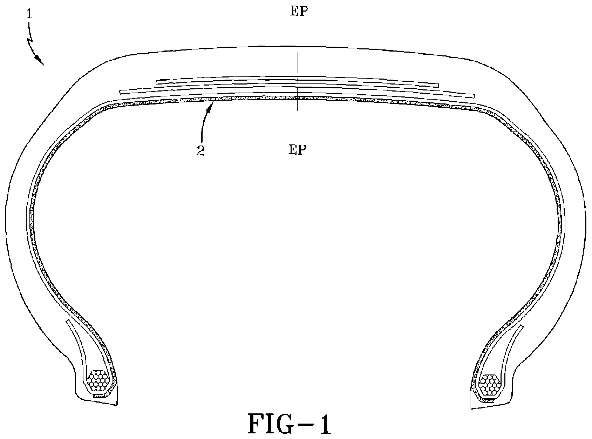

FIG 1 illustrates a cross-sectional view of a pneumatic tire 1 containing a laminated innerliner layer composite 2, composed of an alloy film bonded to a carcass rubber ply, by an RFL adhesive (not shown). The indicated "EP" represents a center line of the tire 1.

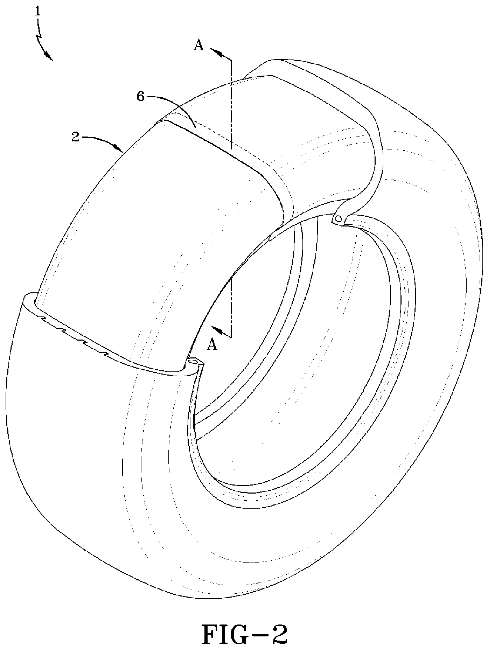

FIG 2 is a perspective view of the tire 1 illustrating a circumferential laminated innerliner layer 2 having its ends overlapped to form a splice 6. The ends of the innerliner layer 2 become spliced upon being wrapped around a cylindrical tire building drum (not shown).
FIGS 3, 4 and 5 are enlarged cross sectional views taken along lines A-A of FIG 2 to further illustrate the splice 6 of the overlapped end portion of the circumferential laminated innerliner layer 2 composed of a thin alloy film 4 with RFL adhesive coatings 5A and 5B on either side of the alloy film 4 to adhesively bond the alloy film 4 to the cord reinforced rubber tire carcass ply 3 and particularly RFL adhesive coating 5B bonding the overlapped portion of the laminate layer 3 at the splice 6.

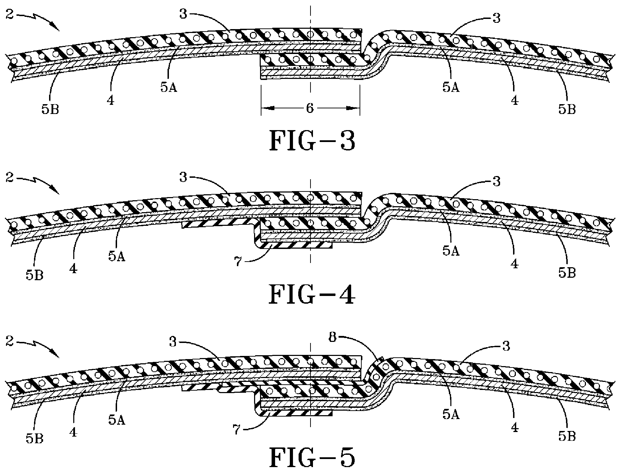

FIG 3 is a cross sectional view of the splice 6 of the overlapped end portion of the laminated innerliner layer 2 composed of an alloy film RFL adhesive bonded to a carcass rubber ply.
FIG 4 is the cross sectional view of FIG 3 which illustrates a reinforcing rubber layer or cover strip 7 applied over a spliced end of the overlapped laminated innerliner layer 2 at the splice 6 where the rubber cover strip 7 extends over and is RFL adhesive bonded to the splice and to a surface of the laminated innerliner layer 2, namely its alloy film 4, which adjoins either side of the splice 6 by the RFL adhesive coatings 5A and 5B, respectively. The rubber cover strip 7 does not contain (is exclusive of) cord reinforcement.
FIG 5 illustrates the laminated innerliner layer 2 with its ends overlapped to form an RFL adhesive bonded splice 6 of FIG 4 with an addition of an intermediate rubber strip 8 positioned between (sandwiched between) and RFL adhesively bonded to the overlapped surfaces of the laminated innerliner 2, namely to surfaces of the alloy film 4 at the splice 6 through the RFL adhesive coatings 5A and 5B, respectively.

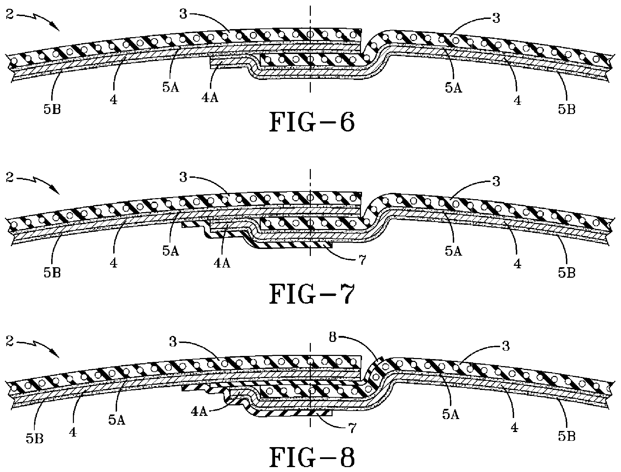

FIGS 6, 7 and 8 are similar to FIGS 3, 4 and 5, respectively, except that a reinforcement of the splice 6 is provided by an extension 4A of the alloy film 4 with its RFL adhesive coatings 5A and 5B is provided which extends beyond the splice 6 and which is adhered to the laminated innerliner 2 through both RFL adhesive coatings 5A and 5B.

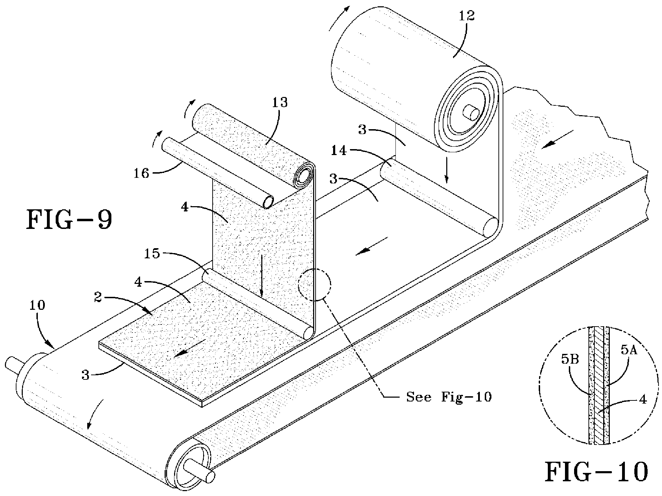

FIGS 9 and 10 are provided to illustrate an example of preparation of the pre-formed laminated innerliner 2.
FIG 9 shows a conveyor belt 10, let-off rolls 12 and 13, a take-up roll 16 and control bars 14 and 15.

With reference to FIG 9, for preparation of the laminated innerliner 2, a cord reinforced rubber carcass ply 3 is fed from a let-off roll 12 onto the moving conveyor belt 10 with an adjustably positioned control bar 14 controlling placement of the rubber carcass ply 3 onto the conveyor belt 10.

With further reference to FIG 9, an alloy film 4, with an RFL adhesive coated on both of its sides, is fed from its let-off roll 13 and applied to the top side of the already deposited rubber carcass ply 3 on the moving conveyor belt 10 with its placement on the carcass ply controlled by an adjustably positioned control bar 15. A take-up roll 16 is provided to take up a protective, adhesive resistant, film, or paper, fed from the let-off roll 13 which had been inter-leaved between rolled up layers of the adhesive layer-containing alloy film 4 for storage purposes.

With additional reference to FIG 9, the resultant laminated composite, namely a pre-formed laminated innerliner composite 2 is rolled on a take-up roll (not shown) from the moving conveyor belt 10 and stored for later use.

FIG 10 is an expanded view of the alloy film 4 shown in FIG 9 which illustrates the RFL adhesive coating on both sides as RFL coatings 5A and 5B. The RFL coatings are the same and simply labeled in FIG 10 as 5A and 5B for convenience.

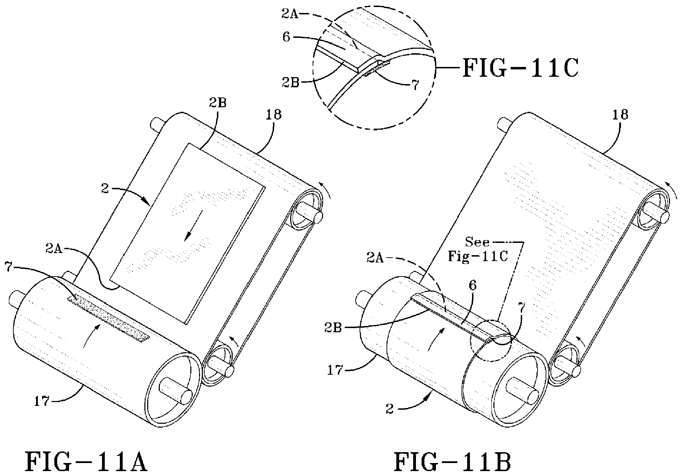

FIGS 11A and 11B illustrate an example of application of the pre-formed laminated innerliner 2 onto a tire building drum 10 to form a splice 6 in advance of building the rest of the tire (not shown) onto the pre-formed innerliner layer 2.

With reference to FIG 11A, the reinforcing rubber strip 7, exclusive of cord reinforcement, is applied to the building drum 17 in a manner shown in FIG 11A.

The pre-formed innerliner laminate 2 is shown as being positioned on a moving conveyor belt 18 with its leading edge 2A positioned in the direction of the rotating building drum 17 and its following edge 2B on the opposite end of the innerliner laminate 2.

With reference to FIG 11B, the pre-formed innerliner laminate 2 is shown as being wound around the tire building drum 17 in a manner that its leading edge 2A is positioned over the reinforcing rubber strip 7 and its following edge 2B is positioned over the innerliner laminate 2 on the rotating building drum 17 to from the splice 6 in a manner shown in FIG 11B.

The multilayered laminate of barrier layer composite 2 is presented with its end portions overlapped to form a splice 6 on the rotating building drum 17 to include the reinforcing rubber strip 7 which is RFL adhesively bonded to the innerliner laminate 2 of the splice 6 contrast to the ends 2A and 2B of the innerliner laminate 2 being end-to-end butt spliced.

With reference to FIG 11C, an enlarged portion of FIG 11B the resulting splice 6 is more clearly shown as comprising the reinforcing rubber strip 7 abridging the leading edge 2A of the innerliner laminate 2 and the innerliner laminate 2 itself and with the following edge 2B of the innerliner laminate 2 overlaying the innerliner laminate 2.

In practice, the alloy film 4 may be either a nylon or polyester terephthalate based film, desirably a nylon based film, containing a blend of sulfur curable elastomer domains or additional thermoplastic material.

Exemplary of the nylon of the nylon based film layer is, for example, nylon 6, nylon 66 or nylon 6,66, particularly nylon 6.

Polyvinylidinechloride is not desired because to it is unnecessarily subject to degradation in the presence of moisture for the innerliner barrier, and thereby the innerliner composite, of this invention as well as other polymeric films such as polyethylene and films of other polyolefins which have inadequate air impermeability as well as polyvinylchloride based films.

The thin polymeric film (nylon or polyethylene terephthalate polyester) for the barrier layer may have a film thickness, for example, from 25 to 200 microns. Alternately the thickness of the thin film may range from 50 microns to 150 microns.

The aforesaid thin polymeric film for the barrier layer preferably has an oxygen permeability of less than 20 x 10⁻¹² cc-cm/cm²·sec·cmHg. Desirably, the aforesaid polymeric film for the barrier layer may also have an elongation, for example, of at least 200 percent at 23°C. As such, it is intended that, when used as the barrier layer of the tire, the polymeric film is not intended to break during the tire shaping process.

For the bonding of the innerliner, or barrier layer, composite to the tire carcass, the RFL adhesive is desired instead of other adhesive materials such as, for example, rosin-based resins; terpene-based resins; petroleum resins; cumarin-indene resins; styrene based resin other than said RFL adhesive; alkylphenol resins; a polyester polyol/isocyanate-type resins; an acrylic acid ester copolymer/organic peroxide-type resins; and reinforced polyurethane adhesive (RPU) resins.

The RFL adhesive may be applied to the innerliner composite by various methods including, for example, as spray coating, dip coating, or extrusion coating. The thickness of the RFL adhesive coating may be, for example, within the range from 0.5 microns to 10, alternately from 0.5 microns to 5 microns.

The rubber compositions for the rubber tire carcass layer and the rubber layer for the innerliner composite can contain conventional rubber tire additives to provide a desired rubber property as would be applied by one having skill in the appropriate art. Such known and commonly used additive materials may include, for example, sulfur cure activators, retarders and accelerators, rubber processing oils, resins including tackifying resins, plasticizers, fatty acids, zinc oxide, waxes, antidegradant, antiozonants, and peptizing agents.

The uncured tire assembly can be molded and sulfur cured in a suitable tire mold at an elevated temperature and pressure conditions as would be appreciated and known to those having skill in such art.

It is concluded that application of the uncured, sulfur curable, rubber strip over the splice ends of the uncured tire innerliner composite strip, which is bonded to the alloy film of the innerliner composite by the RFL adhesive coating, provides significant reinforcement of the splice to respond to stress caused by expansion of the uncured tire during its building.

It is further concluded that application of the uncured, sulfur curable, rubber strip between (sandwiched between) the overlaying end portions of the innerliner composite at the splice and bonded to the alloy film of the innerliner composite by the RFL adhesive coating at the splice provides significant reinforcement of the splice to respond to stress caused during the building of the tire.

## Claims

1. A tire having a circumferential tire tread and an underlying and supporting carcass comprising at least one uncured cord reinforced rubber ply (3) extending from spaced apart tire beads through the crown of the tire and a preferably pre-formed laminated tire innerliner (2), wherein said laminated tire innerliner (2) comprises an alloy film (4) cohesively bonded to said uncured cord reinforced rubber ply (3), wherein both sides of said alloy film (4) contain an adhesive coating (5A, 5B), wherein said alloy film (4) is cohesively bonded to said uncured cord reinforced rubber ply (3) by said coating (5A, 5B) on said alloy film (4), the coating (5A) being adjacent to the uncured cord reinforced rubber ply (3), wherein the alloy film (4) comprises at least 50 percent by weight of a thermoplastic polymer comprising at least one of nylon or polyester terephthalate and a second or minor portion of at least one of:
(A) a dispersion of elastomer domains comprising at least one diene-based elastomer, and
(B) a polymer comprising at least one of polyalkylene glycol, polyoxyalkylene diamine and copolymers thereof; and wherein
the laminated tire innerliner (2) is a circumferential innerlayer of the tire having its ends joined together in an overlapped configuration to thereby form a cohesively bonded splice (6); **characterized in that**
the adhesive coating (5A, 5B) is a RFL adhesive coating (5A, 5B) and the cohesively bonded splice (6) is a RFL cohesively bonded splice (6); and **in that**
the splice (6) of the RFL coated overlapped ends of the laminate is reinforced by a rubber strip (7) positioned over a spliced end of said laminate at said splice (6) and extending over and RFL cohesively bonded to surfaces of the laminate adjoining the spliced end.

2. The tire of claim 1 wherein the splice (6) of the RFL coated overlapped ends of the laminate is reinforced by at least one of:
(C) a rubber strip (8) positioned between and RFL cohesively bonded to the overlapped surfaces of the laminate at said splice (6); and
(D) a portion of the alloy film (4) extending beyond the splice (6) and the uncured cord reinforced rubber ply ends of the laminate which is RFL cohesively bonded to surfaces of the laminate.

3. The tire of claim 1 or 2 wherein the rubber composition of said uncured cord reinforced rubber ply (3) comprises of at least one diene-based elastomer, without a butyl or a halobutyl based rubber; and/or wherein the rubber composition of said uncured cord reinforced rubber ply (3) is free of butyl or halobutyl based rubber.

4. The tire of at least one of the previous claims wherein said RFL adhesive comprises a resorcinol-formaldehyde resin/styrene-butadiene vinylpyridine latex optionally containing a styrene-butadiene rubber latex, and optionally further containing a blocked isocyanate.

5. The tire of at least one of the previous claims wherein the rubber strip (7) comprises at least one sulfur curable diene-based elastomer.

6. The tire of at least one of the previous claims wherein the alloy film (4) comprises at least 50 percent by weight of a thermoplastic polymer comprising at least one of nylon or polyester terephthalate and a second or minor portion of polymer comprising at least one of polyalkylene glycol, polyoxyalkylene diamine and copolymers thereof.

7. The tire of at least one of the previous claims wherein the alloy film (4) comprises at least 50 percent by weight of a thermoplastic polymer comprising at least one of nylon or polyester terephthalate and a second or minor portion of polymer comprising at least one of polyethyleneglycol, polypropyleneglycol, polytetramethylene glycol polyoxyethylene diamine, polyoxypropylene diamine polytetramethylene diamine and copolymers thereof.

8. The tire of at least one of the previous claims as a sulfur cured rubber tire, preferably a sulfur cured rubber pneumatic tire.

9. A method of preparing a tire, preferably a pneumatic tire, the method comprising:
(A) applying a pre-formed laminated innerliner uncured layer around a cylindrical tire building drum (17);
(B) overlapping the ends of the applied pre-formed laminated innerliner uncured layer to form a splice (6); and
(C) reinforcing the splice (6) by at least one of:
(1) application of a rubber strip (7) over the splice (6) which extends over the splice ends and is RFL cohesively bonded to the splice (6) and to surfaces of the laminate adjoining the splice (6);
(2) application of a rubber strip (8) between and RFL cohesively bonded to the overlapped surfaces of the laminate adjoining the splice (6); and
(3) providing an extension of an RFL coated alloy film (4) beyond the splice (6) and providing cord reinforced rubber carcass ply ends which are cohesively bonded to surfaces of the laminate by an RFL adhesive coating, the RFL coating (5A) being adjacent to the cord reinforced rubber carcass ply ends;
wherein the pre-formed laminated uncured innerliner layer comprises an alloy film (4) adhesively bonded to a tire carcass cord reinforced rubber ply (3);
wherein the alloy film (4) comprises of at least 50 percent by weight of a thermoplastic polymer comprising of at least one of nylon or polyester terephthalate and a second or minor portion of at least one of:
a dispersion of elastomer domains comprising at least one diene-based elastomers; and
a polymer comprising at least one of polyalkylene glycol, polyoxyalkylene diamine and copolymers thereof;
wherein both sides of said alloy film (4) contain an RFL adhesive coating; and
wherein said alloy film (4) is cohesively bonded to said tire carcass cord reinforced rubber tire carcass ply (3) by said RFL coating on said alloy film (4).

10. The method of claim 9 wherein:
the rubber strip (7) comprises of at least one sulfur curable diene-based elastomers;
the rubber composition of said tire carcass cord reinforced rubber tire carcass ply (3) comprises of at least one diene-based elastomer, without a butyl or halobutyl based rubber; and
said RFL adhesive comprises a resorcinol-formaldehyde resin/styrene-butadiene vinylpyridine latex optionally containing a styrene-butadiene rubber latex, and further optionally containing a blocked isocyanate.

11. The method of claim 9 or 10 wherein the tire carcass cord reinforced rubber tire carcass ply (3) is an uncured tire carcass cord reinforced rubber tire carcass ply (3).

12. The method of claim 9, 10 or 11, further comprising providing a circumferential tire tread and an underlying and supporting carcass comprising at least one uncured cord reinforced rubber ply (3) extending from spaced apart tire beads through the crown of the tire.

13. The method of at least one of the claims 9 to 12 further comprises curing the tire.

## Patentansprüche

1. Reifen, der eine umfangsgerichtete Reifenlauffläche und eine darunterliegende und tragende Karkasse aufweist, umfassend mindestens eine unvulkanisierte kordverstärkte Kautschuklage (3), die sich von voneinander beabstandeten Reifenwülsten durch den Zenit des Reifens erstreckt, und eine bevorzugt vorgeformte laminierte Reifeninnenisolierung (2), wobei die laminierte Reifeninnenisolierung (2) einen Legierungsfilm (4) umfasst, der kohäsiv an die unvulkanisierte kordverstärkte Kautschuklage (3) gebondet ist, wobei beide Seiten des Legierungsfilms (4) eine Haftbeschichtung (5A, 5B) enthalten, wobei der Legierungsfilm (4) durch die Beschichtung (5A, 5B) auf dem Legierungsfilm (4) kohäsiv an die unvulkanisierte kordverstärkte Kautschuklage (3) gebondet ist, wobei sich die Beschichtung (5A) benachbart zu der unvulkanisierten kordverstärkten Kautschuklage (3) befindet, wobei der Legierungsfilm (4) mindestens 50 Gewichtsprozent eines thermoplastischen Polymers umfasst, umfassend mindestens eines von Nylon oder Polyesterterephthalat und einen zweiten oder kleineren Anteil von mindestens einem von:
(A) einer Dispersion von Elastomerdomänen, umfassend mindestens ein dienbasiertes Elastomer, und
(B) einem Polymer, umfassend mindestens eines von Polyalkylenglykol, Polyoxyalkylendiamin und Copolymeren davon; und wobei
die laminierte Reifeninnenisolierung (2) eine umfangsgerichtete Innenlage des Reifens ist, deren Enden in einer überlappenden Konfiguration zusammengefügt sind, um dadurch einen kohäsiv gebondeten Spleiß (6) zu bilden; **dadurch gekennzeichnet, dass**
die Haftbeschichtung (5A, 5B) eine RFL-Haftbeschichtung (5A, 5B) ist und der kohäsiv gebondete Spleiß (6) ein RFL-kohäsiv gebondeter Spleiß (6) ist; und dass
der Spleiß (6) der RFL-beschichten überlappten Enden des Laminats durch einen Kautschukstreifen (7) verstärkt ist, der über einem gespleißten Ende des Laminats an dem Spleiß (6) positioniert ist und sich erstreckt über, und RFL-kohäsiv gebondet ist an, Oberflächen des Laminats, die an das gespleißte Ende anschließen.

2. Reifen nach Anspruch 1, wobei der Spleiß (6) der RFLbeschichteten überlappten Enden des Laminats verstärkt ist durch mindestens eines von:
(C) einem Kautschukstreifen (8), der zwischen den überlappten Oberflächen des Laminats an dem Spleiß (6) positioniert und RFL-kohäsiv an diese gebondet ist; und
(D) einem Teil des Legierungsfilms (4), der sich über den Spleiß (6) und die unvulkanisierten kordverstärkten Kautschuklagenenden des Laminats hinaus erstreckt, der RFL-kohäsiv an Oberflächen des Laminats gebondet ist.

3. Reifen nach Anspruch 1 oder 2, wobei die Kautschukzusammensetzung der unvulkanisierten kordverstärkten Kautschuklage (3) aus mindestens einem dienbasierten Elastomer, ohne einen Butyl- oder einen Halobutyl-basierten Kautschuk, besteht; und/oder wobei die Kautschukzusammensetzung der unvulkanisierten kordverstärkten Kautschuklage (3) frei von Butyl- oder Halobutyl-basiertem Kautschuk ist.

4. Reifen nach mindestens einem der vorhergehenden Ansprüche, wobei der RFL-Klebstoff einen Resorcinol-Formaldehydharz/Styrol-Butadien-Vinylpyridinlatex umfasst, der optional einen Styrol-Butadien-Kautschuklatex enthält und optional weiter ein blockiertes Isocyanat enthält.

5. Reifen nach mindestens einem der vorhergehenden Ansprüche, wobei der Kautschukstreifen (7) mindestens ein schwefelvulkanisierbares dienbasiertes Elastomer umfasst.

6. Reifen nach mindestens einem der vorhergehenden Ansprüche, wobei der Legierungsfilm (4) mindestens 50 Gewichtsprozent eines thermoplastischen Polymers umfasst, umfassend mindestens eines von Nylon oder Polyesterterephthalat und einen zweiten oder kleineren Anteil von Polymer, umfassend mindestens eines von Polyalkylenglykol, Polyoxyalkylendiamin und Copolymeren davon.

7. Reifen nach mindestens einem der vorhergehenden Ansprüche, wobei der Legierungsfilm (4) mindestens 50 Gewichtsprozent eines thermoplastischen Polymers umfasst, umfassend mindestens eines von Nylon oder Polyesterterephthalat und einen zweiten oder kleineren Anteil von Polymer, umfassend mindestens eines von Polyethylenglykol, Polypropylenglykol, Polytetramethylenglykol Polyoxyethylendiamin, Polyoxypropylendiamin Polytetramethylendiamin und Copolymeren davon.

8. Reifen nach mindestens einem der vorhergehenden Ansprüche als schwefelvulkanisierter Kautschukreifen, bevorzugt ein schwefelvulkanisierter Kautschuk-Luftreifen.

9. Verfahren zur Herstellung eines Reifens, bevorzugt eines Luftreifens, wobei das Verfahren umfasst:
(A) Anbringen einer vorgeformten laminierten unvulkanisierten Innenisolierungslage um eine zylindrische Reifenaufbautrommel (17);
(B) Überlappen der Enden der angebrachten vorgeformten laminierten unvulkanisierten Innensolierungslage, um einen Spleiß (6) zu bilden; und
(C) Verstärken des Spleißes (6) durch mindestens eines von:
(1) Anbringen eines Kautschukstreifens (7) über dem Spleiß (6), der sich über die Spleißenden erstreckt und RFL-kohäsiv an den Spleiß (6) und an Oberflächen des Laminats, die an den Spleiß (6) anschließen, gebondet ist;
(2) Anbringen eines Kautschukstreifens (8) zwischen den, und RFL-kohäsiv gebondet an die, überlappten Oberflächen des Laminats, die an den Spleiß (6) anschließen; und
(3) Vorsehen einer Verlängerung eines RFL-beschichten Legierungsfilms (4) über den Spleiß (6) hinaus und Vorsehen kordverstärkter Kautschuk-Karkassenlagenenden, die durch eine RFL-Haftbeschichtung kohäsiv an Oberflächen des Laminats gebondet sind, wobei sich die RFL-Beschichtung (5A) benachbart zu den kordverstärkten Kautschuk-Karkassenlagenenden befindet; wobei die vorgeformte laminierte unvulkanisierte Innenisolierungslage einen Legierungsfilm (4) umfasst, der haftend an eine Reifenkarkassen-kordverstärkte Kautschuklage (3) gebondet ist;
wobei der Legierungsfilm (4) zu mindestens 50 Gewichtsprozent aus einem thermoplastischen Polymer besteht, bestehend aus mindestens einem von Nylon oder Polyesterterephthalat und einem zweiten oder kleineren Anteil von mindestens einem von:
einer Dispersion von Elastomerdomänen, umfassend mindestens ein dienbasiertes Elastomer; und
einem Polymer, umfassend mindestens eines von Polyalkylenglykol, Polyoxyalkylendiamin und Copolymere davon;
wobei beide Seiten des Legierungsfilms (4) eine RFL-Haftbeschichtung enthalten; und
wobei der Legierungsfilm (4) durch die RFL-Beschichtung an dem Legierungsfilm (4) kohäsiv an die Reifenkarkassen-kordverstärkte Kautschukreifenkarkassenlage (3) gebondet ist.

10. Verfahren nach Anspruch 9, wobei:
der Kautschukstreifen (7) aus mindestens einem schwefelvulkanisierbaren dienbasierten Elastomer besteht;
die Kautschukzusammensetzung der Reifenkarkassenkordverstärkten Kautschukreifenkarkassenlage (3) aus mindestens einem dienbasierten Elastomer, ohne einen Butyl- oder Halobutyl-basierten Kautschuk, besteht; und
der RFL-Klebstoff einen Resorcinol-Formaldehydharz/Styrol-Butadien-Vinylpyridinlatex umfasst, der optional einen Styrol-Butadien-Kautschuklatex enthält und weiter optional ein blockiertes Isocyanat enthält.

11. Verfahren nach Anspruch 9 oder 10, wobei die Reifenkarkassen- kordverstärkte Kautschukreifenkarkassenlage (3) eine unvulkanisierte Reifenkarkassen-kordverstärkte Kautschukreifenkarkassenlage (3) ist.

12. Verfahren nach Anspruch 9, 10 oder 11, weiter das Vorsehen einer umfangsgerichteten Reifenlauffläche und einer darunterliegenden und tragenden Karkasse umfassend, die mindestens eine unvulkanisierte kordverstärkte Kautschuklage (3) umfasst, die sich von voneinander beabstandeten Reifenwülsten durch den Zenit des Reifens erstreckt.

13. Verfahren nach mindestens einem der Ansprüche 9 bis 12, weiter das Vulkanisieren des Reifens umfassend.

## Revendications

1. Bandage possédant une bande de roulement circonférentielle de bandage et une carcasse sous-jacente et de support comprenant au moins une nappe de caoutchouc non vulcanisé (3) renforcé avec des câblés s'étendant à partir de talons de bandage espacés l'un de l'autre, en passant par le sommet du bandage et un calandrage intérieur stratifié de bandage, de préférence préformé (2), dans lequel ledit calandrage intérieur stratifié de bandage (2) comprend un film en alliage (4) lié de manière cohésive à ladite nappe de caoutchouc non vulcanisé (3) renforcé avec des câblés ; dans lequel les deux côtés dudit film en alliage (4) contiennent un revêtement adhésif (5A, 5B) ; dans lequel ledit film en alliage (4) est lié de manière cohésive à ladite nappe de caoutchouc non vulcanisé (3) renforcé avec des câblés via ledit revêtement adhésif (5A, 5B) sur ledit film en alliage (4), le revêtement (5A) étant adjacent à la nappe de caoutchouc non vulcanisé (3) renforcé avec des câblés ; dans lequel le film en alliage (4) comprend, à concurrence d'au moins 50 % en poids, un polymère thermoplastique comprenant au moins un élément choisi parmi du nylon et du polyéthylène téréphtalate et une seconde portion ou portion mineure constituée par au moins un élément choisi parmi :
(A) une dispersion de domaines élastomères comprenant au moins un élastomère à base diénique ; et
(B) un polymère comprenant au moins un polymère choisi parmi un polyalkylène glycol, une polyoxyalkylène diamine et leurs copolymères ; et dans lequel
le calandrage intérieur de bandage stratifié (2) représente une couche interne circonférentielle du bandage dont les extrémités sont jointes l'une à l'autre dans une configuration de superposition pour ainsi former une épissure (6) liée de manière cohésive ; **caractérisé en ce que**
le revêtement adhésif (5A, 5B) est un revêtement adhésif de type RFL (5A, 5B) et l'épissure liée de manière cohésive (6) est une épissure liée via une cohésion de type RFL (6) ; et **en ce que**
l'épissure (6) des extrémités superposées enduites de RFL du stratifié est renforcée par une bande de caoutchouc (7) disposée par-dessus une extrémité épissée dudit stratifié à ladite épissure (6) et s'étendant par-dessus les surfaces du stratifié contiguës à l'extrémité épissée, tout en y étant liées via une cohésion de type RFL.

2. Bandage selon la revendication 1, dans lequel l'épissure (6) des extrémités superposées enduites de RFL du stratifié est renforcée par au moins un des éléments ci-après :
(C) une bande en caoutchouc (8) positionnée entre les extrémités superposées du stratifié à ladite épissure (6), tout en y étant liée auxdites extrémités via une cohésion de type RFL ; et
(D) une portion du film en alliage (4) s'étendant au-delà de l'épissure (6) et des extrémités de la nappe de caoutchouc non vulcanisé renforcé avec des câblés du stratifié qui est lié via une cohésion de type RFL à des surfaces du stratifié.

3. Bandage selon la revendication 1 ou 2, dans lequel la composition de caoutchouc de ladite nappe de caoutchouc non vulcanisé renforcé avec des câblés (3) comprend au moins un élastomère à base diénique, en l'absence d'un caoutchouc basé sur un ou plusieurs groupes butyle ou halogénobutyle ; et/ou dans lequel la composition de caoutchouc de ladite nappe de caoutchouc non vulcanisé renforcé avec des câblés (3) est exempte d'un caoutchouc basé sur un ou plusieurs groupes butyle ou halogénobutyle.

4. Bandage selon au moins une des revendications précédentes, dans lequel ledit adhésif de type RFL comprend un composite de résine de résorcinol-formaldéhyde/latex de styrène-butadiène vinylpyridine contenant de manière facultative un latex de caoutchouc de styrène-butadiène, et contenant en outre de manière facultative un isocyanate bloqué.

5. Bandage selon au moins une des revendications précédentes, dans lequel la bande de caoutchouc (7) comprend au moins un élastomère à base diénique vulcanisable au soufre.

6. Bandage selon au moins une des revendications précédentes, dans lequel le film en alliage (4) comprend, à concurrence d'au moins 50 % en poids, un polymère thermoplastique comprenant au moins un élément choisi parmi du nylon et du polyéthylène téréphtalate et une seconde portion ou portion mineure constituée d'un polymère comprenant au moins un polymère choisi parmi un polyalkylène glycol, une polyoxyalkylène diamine et leurs copolymères.

7. Bandage selon au moins une des revendications précédentes, dans lequel le film en alliage (4) comprend, à concurrence d'au moins 50 % en poids, un polymère thermoplastique comprenant au moins un élément choisi parmi du nylon et du polyéthylène téréphtalate et une seconde portion ou portion mineure constituée d'un polymère comprenant au moins un polymère choisi parmi un polyéthylèneglycol, un polypropylèneglycol, une polytétraméthylène glycol polyoxyéthylène diamine, une polypropylène diamine, une polytétraméthylène diamine et leurs copolymères.

8. Bandage selon au moins une des revendications précédentes sous la forme d'un bandage en caoutchouc vulcanisé au soufre, de préférence sous la forme d'un bandage pneumatique en caoutchouc vulcanisé au soufre.

9. Procédé de préparation d'un bandage, de préférence d'un bandage pneumatique, le procédé comprenant le fait de :
(A) appliquer une couche non vulcanisée faisant office de calandrage intérieur stratifié préformé autour d'un tambour cylindrique de confection de bandage (17) ;
(B) faire se superposer les extrémités de la couche non vulcanisée appliquée faisant office de calandrage intérieur stratifié préformé pour obtenir une épissure (6) ; et
(C) renforcer l'épissure (6) via au moins une des actions ci-après consistant à :
(1) appliquer une bande en caoutchouc (7) par-dessus l'épissure (6), qui s'étend par-dessus les extrémités de l'épissure et qui est liée via une cohésion de type RFL à l'épissure (6) et aux surfaces du stratifié adjacent à l'épissure (6) ;
(2) appliquer une bande en caoutchouc (8) s'étendant entre les surfaces superposées du stratifié adjacentes à l'épissure (6) et liée auxdites surfaces via une cohésion de type RFL ; et
(3) procurer une extension d'un film en alliage (4) enduit de RFL au-delà de l'épissure (6) et procurer des extrémités de nappe de carcasse en caoutchouc renforcé avec des câblés qui sont liées via de manière cohésive à des surfaces du stratifié via un revêtement de type RFL, le revêtement de type RFL (5A) étant adjacent aux extrémités de nappe de carcasse en caoutchouc renforcé avec des câblés ;
dans lequel la couche non vulcanisée faisant office de calandrage intérieur stratifié préformé comprend un film en alliage (4) lié via un adhésif à une nappe de carcasse de bandage (3) en caoutchouc renforcé avec des câblés ;
dans lequel le film en alliage (4) comprend, à concurrence d'au moins 50 % en poids, un polymère thermoplastique comprenant au moins un élément choisi parmi du nylon et du polyéthylène téréphtalate et une seconde portion ou portion mineure constituée par au moins un élément choisi parmi :
une dispersion de domaines élastomères comprenant au moins un élastomère à base diénique ; et
un polymère comprenant au moins un polymère choisi parmi un polyalkylène glycol, une polyoxyalkylène diamine et leurs copolymères ;
dans lequel les deux côtés dudit film en alliage (4) contiennent un revêtement adhésif de type RFL ; et
dans lequel ledit film en alliage (4) est lié de manière cohésive à ladite nappe de carcasse de bandage (3) en caoutchouc renforcé avec des câblés via ledit revêtement de type RFL sur ledit film en alliage (4).

10. Procédé selon la revendication 9, dans lequel :
la bande de caoutchouc (7) comprend au moins un élastomère à base diénique durcissable au soufre ;
la composition de caoutchouc de ladite nappe de carcasse de bandage (3) en caoutchouc renforcé avec des câblés comprend au moins un élastomère à base diénique, en l'absence d'un caoutchouc basé sur un ou plusieurs groupes butyle ou halogénobutyle ;
ledit adhésif de type RFL comprend un composite de résine de résorcinol-formaldéhyde/latex de styrène-butadiène vinylpyridine contenant de manière facultative un latex de caoutchouc de styrène-butadiène, et contenant en outre de manière facultative un isocyanate bloqué.

11. Procédé selon la revendication 9 ou 10, dans lequel la nappe de carcasse de bandage (3) en caoutchouc renforcé avec des câblés est une nappe de carcasse de bandage non vulcanisée (3) en caoutchouc renforcé avec des câblés.

12. Procédé selon la revendication 9, 10 ou 11, comprenant en outre le fait de procurer une bande de roulement circonférentielle de bandage et une carcasse sous-jacente et de support comprenant au moins une nappe de caoutchouc non vulcanisé (3) renforcé avec des câblés s'étendant à partir de talons de bandage espacés l'un de l'autre, en passant par le sommet du bandage.

13. Procédé selon au moins une des revendications 9 à 12, comprenant en outre le fait de vulcaniser le bandage.
